# EUROPÄISCHE PATENTSCHRIFT

(11) **EP 2 837 584 B1**
(45) Veröffentlichungstag und Bekanntmachung des Hinweises auf die Patenterteilung: **04.05.2016**
(21) Anmeldenummer: 14176643.6
(22) Anmeldetag: 11.07.2014
(51) Int. Cl.: B65G 21/12, B65G 47/53, B65G 47/64

(54) **Vorrichtung zum Umsetzen von Werkstückträgern mit einstellbarer Mittelstellung**
Device for conveying workpiece holders with adjustable position
Dispositif de déplacement de porte-pièces doté d'une position réglable

(30) Priorität: 12.08.2013 DE 102013215841
(43) Veröffentlichungstag der Anmeldung: 18.02.2015
(73) Patentinhaber: ROBERT BOSCH GMBH, 70442 Stuttgart (DE)
(72) Erfinder: Kiebel, Markus, 70499 Stuttgart (DE)
(74) Vertreter: Maiß, Harald

(56) Entgegenhaltungen:
- EP-A1- 2 110 328
- CN-Y- 2 643 052
- DE-A1- 19 832 416
- DE-C2- 3 012 355
- US-A- 4 262 845
- US-A- 4 335 744

## Beschreibung

Die Erfindung betrifft eine Vorrichtung zum Umsetzen von Werkstück bzw. Werkstückträgern gemäß dem Oberbegriff von Anspruch 1.

Aus der DE 30 12 355 C2 ist eine solche Vorrichtung zum Umsetzen von Werkstückträgen bekannt, welche auch als Hub-Quereinheit bezeichnet wird. Die Vorrichtung umfasst eine Tragbaugruppe, mit der sie an einer übergeordneten Fördervorrichtung, namentlich einem Doppelgurtförderer, befestigbar ist. Weiter ist eine Führungsbaugruppe vorgesehen, welche zwei endlose Zugmittel umfasst, welche parallel zueinander angeordnet sind. Bei den Zugmitteln handelt es sich um Flachriemen oder Zahnriemen. Die Zugmittel werden jeweils durch ein Antriebsrad und zwei Umlenkräder geführt, welche drehbar an der Führungsbaugruppe gelagert sind. Zwischen den Umlenkrädern verlaufen die Zugmittel gerade, wobei sie eine Förderrichtung definieren. Dort liegen die typischerweise plattenförmigen Werkstückträger, die mit Werkstücken beladen sind, auf den Zugmitteln auf, wobei die Zugmittel wiederum an der Führungsbaugruppe abgestützt sind. Weiter ist ein Hubantrieb in Form eines Pneumatikzylinders vorgesehen, mit welchem die Führungsbaugruppe gegenüber der Tragbaugruppe bezüglich einer Hubrichtung bewegt werden kann, wobei die Hubrichtung senkrecht zur Förderrichtung ausgerichtet ist. Eine Querrichtung ist dabei senkrecht zur Förderrichtung und zur Hubrichtung ausgerichtet. Weiter ist eine erste Feder vorgesehen, welche den Hubantrieb im unbetätigten Zustand in einer mittleren Stellung hält.
In der mittleren Stellung befinden sich die Zugmittel der Vorrichtung etwa 1 bis 3 mm unterhalb der Zugmittel der übergeordneten Fördervorrichtung, wobei die Vorrichtung einen Anschlag aufweist, welcher über die Zugmittel der übergeordneten Fördervorrichtung übersteht. Diese Mittelstellung muss beim Anbau der Vorrichtung an die übergeordnete Fördervorrichtung genau eingehalten werden, damit eine einwandfreie Funktion der Vorrichtung gegeben ist. Dabei muss insbesondere die Tragbaugruppe sehr genau zur übergeordneten Fördervorrichtung ausgerichtet werden, was aufwändig ist.

Aus der US 4 262 845 A, der CN 2 643 052 Y, der US 4 335 744 A und der DE 198 32 416 A1 ist die Verwendung von vorbelasteten Federn mit einem verschraubten Anschlag bekannt. Aus der EP 2 110 328 A1 ist eine Verpackungsvorrichtung bekannt, die eine Kettenbahn umfasst.

Die Aufgabe der Erfindung besteht darin, die Montage der Vorrichtung zum Umsetzen von Werkstücken bzw. Werkstückträgern an der übergeordneten Fördervorrichtung zu vereinfachen. Die Vorrichtung soll dabei besonders kostengünstig sein. Darüber hinaus soll eine Kollektion von Vorrichtungen geschaffen werden, die sich hinsichtlich Länge und Breite unterscheiden, wobei sie im Übrigen besonders viele identische Teile aufweisen.

Gemäß dem selbständigen Anspruch wird diese Aufgabe dadurch gelöst, dass ein verstellbarer erster Anschlag für die erste Feder vorgesehen ist. Damit kann die Tragbaugruppe mit einer vergleichsweise großen Lagetoleranz an der übergeordneten Fördervorrichtung montiert werden. Die Mittelstellung der Vorrichtung kann anschließend durch Verstellung des vorgeschlagenen ersten Anschlags einfach eingestellt werden.

Bei den Zugmitteln kann es sich beispielsweise um Flachriemen, Zahnriemen oder Förderketten, insbesondere Rollenketten, handeln.

Es ist ein gesondertes Verbindungsteil fest mit einem zugeordneten Hubantrieb verbunden, wobei in das Verbindungsteil eine Stellschraube eingeschraubt ist, welche den ersten Anschlag für die erste Feder bildet. Durch die Anordnung der Stellschraube in dem Verbindungsteil ist der erste Anschlag der fertig montierten Vorrichtung leicht zugänglich. Hierbei ist anzumerken, dass die Hubantriebe typischerweise im Inneren der Vorrichtung angeordnet sind, wo sie mittels Schraubenschlüssel oder ähnlichen Werkzeugen schlecht erreichbar sind.

Es ist wenigstens ein erster Profilkörper vorgesehen, der sich mit einer konstanten Querschnittsform in Förderrichtung erstreckt, wobei das erste und/oder das zweite Zugmittel einen zugeordneten ersten Profilkörper umgibt und beweglich an diesem gelagert ist, wobei wenigstens ein Hubantrieb über das zugeordnete Verbindungsteil fest mit dem ersten Profilkörper verbunden ist. Der erste Profilkörper wird vorzugsweise aus Aluminium im Strangpressverfahren hergestellt. Er kann daher problemlos auf unterschiedliche Längen abgeschnitten werden, so dass in Förderrichtung unterschiedlich lange Vorrichtungen bereitgestellt werden können. Der erste Profilkörper ist vorzugsweise mit wenigstens einer hinterschnittenen, insbesondere T-förmigen, Nut versehen, um weitere Bauteile, insbesondere das Verbindungsteil, an diesem zu befestigen. Die bewegliche Lagerung der Zugmittel kann wahlweise mittels Umlenkrollen oder mittels Gleitführungen bewerkstelligt werden. Durch die vorgeschlagene Anordnung der Zugmittel wird erreicht, dass der erste Anschlag bzw. die Stellschraube nicht von den Zugmitteln oder den ersten Profilkörpern überdeckt wird, so dass sie gut zugänglich ist.

In den abhängigen Ansprüchen sind vorteilhafte Weiterbildungen und Verbesserungen der Erfindung angegeben.

Der wenigstens eine Hubantrieb kann bezüglich der Querrichtung neben dem zugeordneten ersten Profilkörper und vorzugsweise unmittelbar benachbart zu diesem angeordnet sein. Hierdurch kann das Verbindungsteil besonders klein und damit materialsparend ausgebildet werden. Weiter werden Biegebeanspruchungen durch das Gewicht der zu transportierenden Werkstücke minimiert. Darüber hinaus ist der erste Anschlag zwecks Verstellung gut zugänglich.

Das Verbindungsteil kann einen ersten und einen zweiten Schenkel aufweisen, welche sich in Querrichtung erstrecken, wobei sie voneinander weg weisen, wobei sie in Hubrichtung versetzt angeordnet sind, wobei der zugeordnete Hubantrieb am ersten Schenkel befestigt ist. Hierdurch wird die Bauhöhe der Vorrichtung minimiert. Vorzugsweise sind der wenigstens eine Hubantrieb und der zugeordnete erste Profilkörper bezüglich der Hubrichtung zumindest abschnittsweise im selben Bereich angeordnet.

Vorzugsweise ist der erste Profilkörper am zweiten Schenkel befestigt, wobei der zugeordnete Hubantrieb auf der gegenüberliegenden Seite des zugeordneten Verbindungsteils angeordnet ist.

Das Verbindungsteil kann einen dritten Schenkel aufweisen, welcher sich in Hubrichtung erstreckt, wobei an dem dritten Schenkel wenigstens mittelbar eine Antriebswelle drehbar gelagert ist, wobei das erste und/oder das zweite Zugmittel in Antriebsverbindung mit der Antriebswelle stehen. Es ist an sich bekannt, die Zugmittel durch eine Antriebswelle anzutreiben. Dadurch, dass die Drehlagerung der Antriebswelle am dritten Schenkel des Verbindungsteils befestigt sind, können die entsprechenden Bauteile unabhängig von der Baugröße der Vorrichtung identisch ausgebildet werden.

Dem dritten Schenkel kann ein gesondertes Lagerteil zugordnet sein, in dem die Antriebswelle drehbar gelagert ist, wobei die Lage des Lagerteils bezüglich dem dritten Schenkel in Hubrichtung verstellbar ist. Hierdurch kann die Zugspannung der Zugmittel eingestellt werden. Vorzugsweise ist ein gesondertes Drehlager, insbesondere ein Radialwälzlager, vorgesehen, welches in dem Lagerteil aufgenommen ist.

Der wenigstens eine Hubantrieb kann einen doppeltwirkenden Pneumatikzylinder umfassen, dessen Kolbenstange sich in Hubrichtung erstreckt, wobei das Verbindungsteil fest mit einem freien Ende der Kolbenstange verbunden ist. Vorzugsweise ist das Verbindungsteil am freien Ende der Kolbenstange befestigt. Diese Befestigung des Verbindungsteils an dem zugeordneten Hubantrieb ist besonders einfach und kostengünstig und kann für alle Baugrößen der Vorrichtung identisch ausgebildet werden.

Der wenigstens eine Hubantrieb kann zwei Führungsstangen umfassen, welche in Förderrichtung beabstandet angeordnet sind, wobei der Pneumatikzylinder zwischen den Führungsstangen angeordnet ist, wobei die Führungsstangen an einem ersten Ende fest mit dem Verbindungsteil verbunden sind. Durch die Führungsstangen soll eine Linearführung für die beiden relativ zueinander beweglichen Baugruppen des Hubantriebs bereit gestellt werden. Die vorgeschlagene Befestigung der Führungsstangen an dem zugeordneten Verbindungsteil ist besonders einfach und kostengünstig und kann für alle Größen der Vorrichtung identisch ausgebildet werden.

Der wenigstens eine Hubantrieb kann ein Gehäuse umfassen, in dem die zwei Führungsstangen bezüglich der Hubrichtung linearbeweglich gelagert sind, wobei das Gehäuse eine Zylinderbohrung aufweist, in welcher ein Kolben, der mit der Kolbenstange verbunden ist, aufgenommen ist. Der entsprechende Hubantrieb ist besonders kompakt aufgebaut, so dass problemlos mehrere Hubantriebe in der Vorrichtung untergebracht werden können.

Es können zwei erste Federn vorgesehen sein, die in Förderrichtung benachbart zu einer zugeordneten Führungsstange angeordnet sind. Hierdurch werden Biegebeanspruchungen auf die Linearführung minimiert, wenn die ersten Federn beim Betätigen des Hubantriebes zusammengedrückt werden.

Der wenigstens eine Hubantrieb kann ein Koppelteil umfassen, welches an einem zweiten, dem ersten gegenüberliegenden Ende, fest mit den zwei Führungsstangen verbunden ist. Durch das Koppelteil und das Verbindungsteil werden die Führungsstangen auf einem festen Abstand gehalten. Die entsprechende Baugruppe besitzt eine hohe Steifigkeit, so dass sich die Linearführung auch unter Last nicht verklemmt.

Zwischen dem Gehäuse und dem Koppelteil kann wenigstens eine zweite Feder unter Vorspannung eingebaut sein, wobei die erste Feder in dem Gehäuse aufgenommen und an diesem abgestützt ist. Die wenigstens eine erste Feder besitzt dabei vorzugsweise eine größere Steifigkeit als die wenigstens eine zweite Feder, so dass die erste Feder beim Verstellen des Anschlages im Vergleich zu zweiten Feder nur wenig zusammengedrückt wird. Die erste Feder kann von einer gesonderten Spannvorrichtung unter Vorspannung gesetzt sein, damit sie durch die zunehmende Vorspannung der zweiten Feder überhaupt nicht zusammengedrückt wird, wenn die Stellschraube verstellt wird. Wenn die Vorrichtung in die obere Stellung bewegt wird, wird vorzugsweise der Berührkontakt zwischen der Spannvorrichtung und der Stellschraube aufgehoben. Vorzugsweise steht die wenigstens eine zweite Feder in allen Stellungen des entsprechenden Hubantriebs unter Vorspannung.

Es kann wenigstens eine Hebelvorrichtung mit mehreren Hebelarmen, die drehfest miteinander verbunden sind, vorgesehen sein, wobei jedem Hebelarm ein Hubantrieb zugeordnet ist, dessen Koppelteil mit einem freien Ende des zugeordneten Hebelarms bewegungsgekoppelt ist. Dadurch bewegen sich alle Hubantriebe, die mit der vorgeschlagenen Hebelvorrichtung verbunden sind, synchron. Dadurch ist eine Schiefstellung der Führungsbaugruppe gegenüber der Tragbaugruppe ausgeschlossen.

An der Führungsbaugruppe kann ein zweiter Anschlag vorgesehen sein, welcher in Hubrichtung über das erste bzw. das zweite Zugmittel übersteht. Mit dem zweiten Anschlag wird ein Werkstückträger, der auf der übergeordneten Fördervorrichtung läuft, aufgehalten, wenn sich die Vorrichtung in der mittleren Hubstellung befindet.

Die Erfindung wird im Folgenden anhand der beigefügten Zeichnungen näher erläutert. Es stellt dar:
- Fig. 1: eine perspektivische Ansicht einer erfindungsgemäßen Vorrichtung;
- Fig. 2: eine Explosionsansicht der Vorrichtung nach Fig. 1;
- Fig. 3: eine perspektivische Ansicht der insgesamt vier Varianten des Verbindungsteils; und
- Fig. 4: einen Längsschnitt eines Hubantriebs.

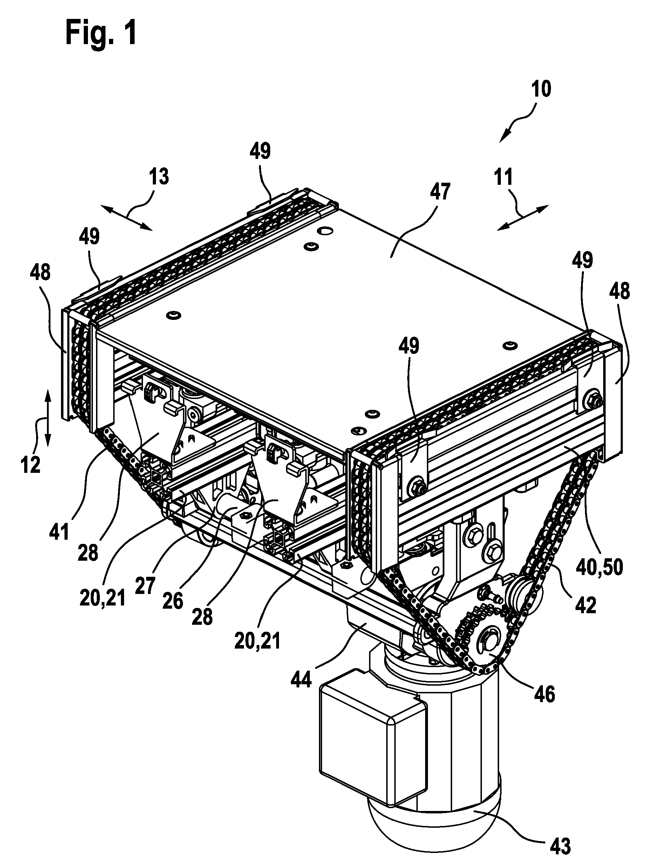

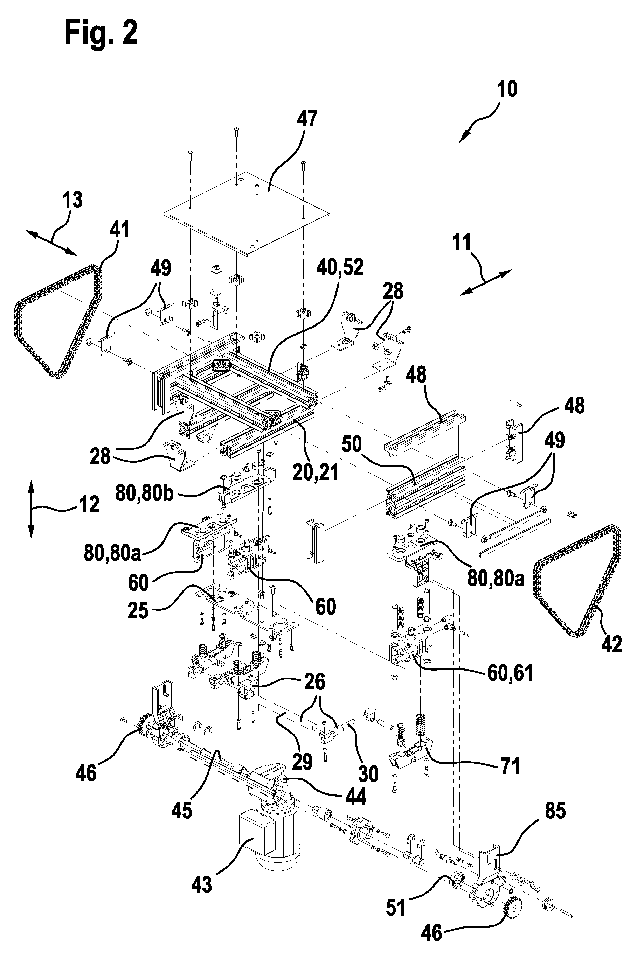

Fig. 1 zeigt eine perspektivische Ansicht einer erfindungsgemäßen Vorrichtung 10, wobei Fig. 2 eine Explosionsansicht dieser Vorrichtung 10 zeigt. Die Vorrichtung 10 umfasst eine Tragbaugruppe 20, welche im vorliegenden Fall zwei zweite Profilkörper 21 umfasst, die sich mit einer konstanten Querschnittsform in Förderrichtung 11 erstrecken. Je nach Breite der Vorrichtung 10 können auch mehr oder weniger zweite Profilkörper 21 vorhanden sein. Die zweiten Profilkörper 21 sind vorzugsweise aus Aluminium im Strangpressverfahren hergestellt, wobei sie vorzugsweise hinterschnittene, insbesondere T-förmige, Befestigungsnuten aufweisen. An den beiden Enden der zweiten Profilkörper 21 ist jeweils ein Befestigungsblech 28 befestigt, mit dem die Tragbaugruppe 20 an einer übergeordneten (nicht dargestellten) Fördervorrichtung befestigt werden kann. Entgegen der Darstellung in Fig. 1 und 2 können die zweiten Profilträger 21 durch weitere Profilkörper fest miteinander verbunden sein, welche in Querrichtung 13 verlaufen.
Unten an den zweiten Profilkörpern 21 ist eine gemeinsame Tragplatte 25 befestigt, insbesondere festgeschraubt, welche aus einem Aluminium- oder einem Stahlblech, vorzugsweise mittels Laserstrahlschneiden, hergestellt ist. Alternativ können auch mehrere gesonderte Tragplatten 25 vorgesehen sein. Oben auf der Tragplatte 25 sind vorliegend insgesamt drei Hubantriebe 60 befestigt, wobei je nach Breite und Länge der Vorrichtung 10 mehr oder weniger Hubantriebe 60 vorgesehen sein können. Die beiden ersten Hubantriebe 23 sind unmittelbar benachbart neben einem zugeordneten ersten Profilkörper 50, der sich in Förderrichtung 11 erstreckt, angeordnet und an diesem befestigt. Die beiden ersten Profilkörper 50 sind über zwei dritte Profilkörper 52 fest miteinander verbunden, welche sich mit einer konstanten Querschnittsform in Querrichtung 13 erstrecken. Der zweite Hubanrieb 24 ist bezüglich der Hubrichtung 12 zwischen der Tragplatte 25 und den dritten Profilkörpern 52 angeordnet und fest mit diesen verbunden. Oben auf den dritten Profilkörpern 52 ist ein Abdeckblech 47 befestigt, welches den Zwischenraum zwischen den beiden ersten Profilkörpern 50 vollständig überdeckt.

Die beiden ersten Profilkörper 50 sind jeweils Bestandteil einer Gleitführung 48 für das erste und das zweite Zugmittel 41; 42, welches vorliegend als Duplex-Rollenkette, vorzugsweise nach nach DIN 8187 oder DIN 8188, ausgebildet ist. Dabei umgeben die endlosen, parallelen Zugmittel 41; 42 den zugeordneten ersten Profilkörper 50. Es kann aber auch daran gedacht sein, die Zugmittel 41; 42 mittels frei drehbarer Umlenkrollen an der Führungsbaugruppe 40 zu führen. Die ersten Profilkörper 50 erstrecken sich mit einer konstanten Querschnittsform in Förderrichtung, wobei sie vorzugsweise aus Aluminium im Strangpressverfahren hergestellt sind. Die ersten Profilkörper 50 sind mit mehreren hinterschnittenen, insbesondere T-förmigen, Befestigungsnuten versehen.

Unten an der Führungsbaugruppe 40 ist ein Elektromotor 43 mit einem Getriebe 44 und einer Antriebswelle 46 angeordnet. Die beiden Drehlager 51 der Antriebswelle 46, welche beispielsweise als Radialrillenkugellager ausgebildet sind, sind jeweils in einem zugeordneten Lagerteil 85 aufgenommen, welches verschiebbar an einem dritten Schenkel 83 eines Verbindungsteils 80a befestigt ist, so dass die Zugmittel 41; 42 gespannt werden können. Auf der Antriebswelle 46, die beispielsweise als Sechskantwelle ausgebildet ist, ist an den beiden äußeren Enden jeweils ein Zahnrad 46 drehfest angebracht, welches von einem zugeordneten Zugmittel 41; 42 umschlungen wird. Damit können die Zugmittel 41; 42 von dem Elektromotor 43 in Bewegung versetzt werden.

Am ersten Profilkörper 50 sind jeweils zwei Anschläge 49 befestigt, die über das zugeordnete Zugmittel 40; 41 in Hubrichtung 12 nach oben überstehen. Die zweiten Anschläge 49 bestehen vorzugsweise aus Stahlblech und sind vorzugsweise mittels Hammerschrauben mit dem ersten Profilkörper 50 verschraubt. Dabei können sie entlang der zugeordneten hinterschnittenen Nut verschoben werden.

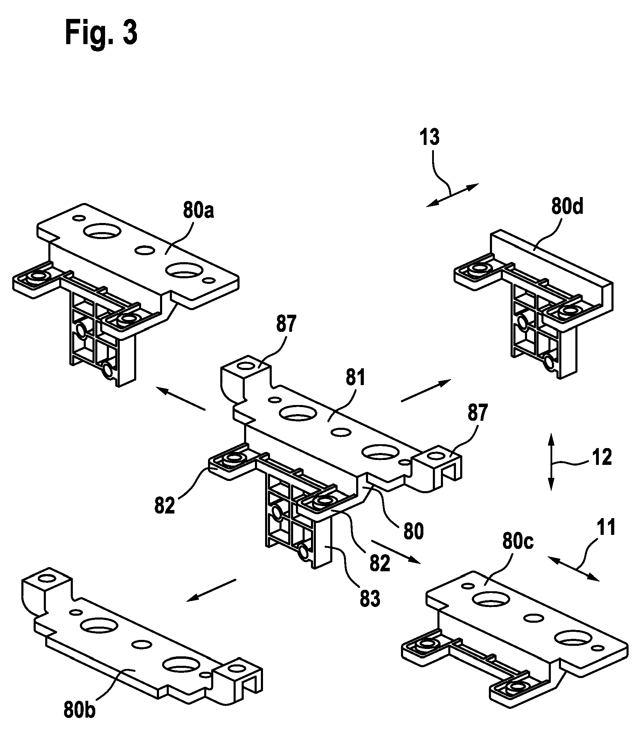

Die Hebelvorrichtung 26 besitzt mehrere Drehlager 27, die an einem zugeordneten zweiten Profilkörper 21 befestigt sind. In den Drehlagern 27 ist eine kreiszylindrische Achse 29 drehbar gelagert, vorzugsweise gleitgelagert. An der Achse 29 sind mehrere Hebelarme 30 befestigt, die relativ zueinander unbeweglich sind. Die Enden der Hebelarme 30 greifen in das Koppelteil (Nr. 71 in Fig. 3) ein, so dass sich alle Hubantriebe 60 synchron bewegen.

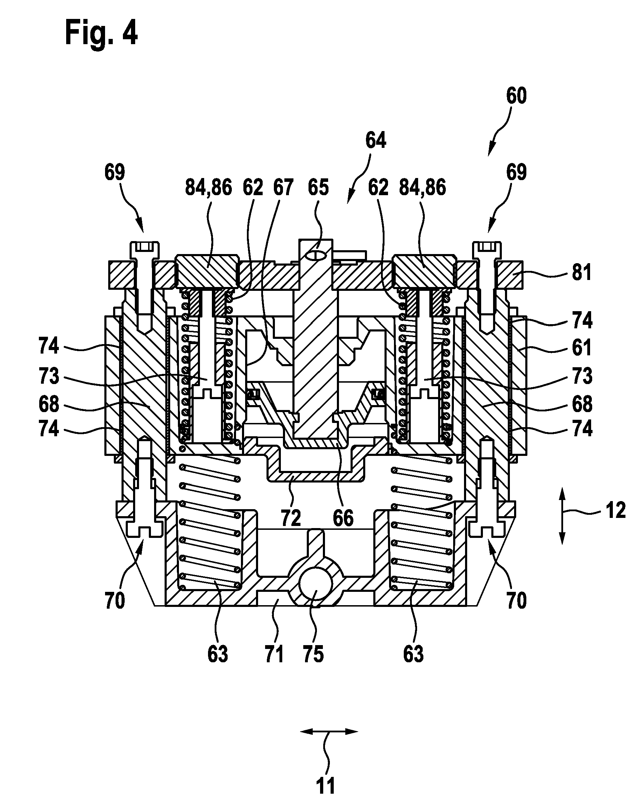

Fig. 3 zeigt eine perspektivische Ansicht der insgesamt vier Varianten des Verbindungsteils 80a - 80d. Mit der Bezugsziffer 80 ist dabei das gemeinsame Rohteil aller vier Verbindungsteile 80a - 80d bezeichnet. Dieses Rohteil 80 wird vorzugsweise im Gussverfahren, insbesondere im Druckgussverfahren, aus Aluminium oder Zink hergestellt. Es umfasst einen ersten, einen zweiten und einen dritten Schenkel 81; 82; 83. Der erste und der zweite Schenkel 81; 82 erstrecken sich in Querrichtung 13 wobei sie in entgegengesetzte Richtung weisen. Dabei wird unten am ersten Schenkel 81 der zugeordnete Hubantrieb befestigt, was mit Bezug auf Fig. 4 noch genauer erläutert wird. Der zweite Schenkel 82 dient zur Befestigung eines zugeordneten ersten Profilkörpers (Nr. 50 in Fig. 2), der oben auf den zweiten Schenkel 82 befestigt wird, vorzugsweise unter Verwendung von Hammerschrauben, welche in die hinterschnittenen Nuten am ersten Profilkörper eingreifen. Der erste und der zweite Schenkel 81; 82 sind in Hubrichtung 12 versetzt zueinander angeordnet, wobei der zweite Schenkel 82 unterhalb des ersten Schenkels 81 angeordnet ist.

Am ersten Schenkel 81 ist an den beiden in Förderrichtung 11 weisenden Enden jeweils ein Befestigungsfortsatz 87 vorgesehen, welcher sich in Hubrichtung 12 nach oben erstreckt. An der oberen Stirnfläche des Befestigungsfortsatzes 87 wird der zweite Profilkörper (Nr. 21 in Fig. 2) befestigt, vorzugsweise unter Verwendung von Hammerschrauben, welche in die hinterschnittenen Nuten am zweiten Profilkörper eingreifen. Hierdurch wird zwischen dem ersten Schenkel 81 und dem zweiten Profilkörper ein Freiraum geschaffen, so dass die Stellschrauben (Nr. 84 in Fig. 4) zugänglich bleiben, beispielsweise für einen Stirnlochschlüssel oder ein ähnliches Werkzeug.

Der dritte Schenkel 83 steht in Hubrichtung 12 nach unten vom ersten und vom zweiten Schenkel 81; 82 ab. Er ist mit kreisrunden Durchbrüchen für Klemmschrauben zur Klemmung des zugeordneten Lagerteils (Nr. 85 in Fig. 2) versehen.

Die erste Variante 80a des Verbindungsteils, welche in Fig. 2 für die beiden äußeren Hubantriebe verwendet wird, erhält man, indem man vom Rohteil 80 die beiden Befestigungsfortsätze 87 abtrennt. Die zweite Variante 80b, welche in Fig. 2 für den mittleren Hubantrieb verwendet wird, erhält man, indem man vom Rohteil 80 den zweiten und den dritten Schenkel 83 abtrennt.
Die dritte Variante 80c des Verbindungsteils erhält man, wenn man ausgehend von der ersten Variante 80a den dritten Schenkel 83 abtrennt. Die dritte Variante 80c wird für Vorrichtungen benötigt, welche in Förderrichtung 11 besonders lang sind, so dass in Förderrichtung 11 zwei Hubantriebe hintereinander angeordnet werden müssen. Zwischen diesen Hubantrieben wird dann die vierte Variante 80d des Verbindungsteils montiert, welche man ausgehend vom Rohteil 80 erhält, indem man den ersten Schenkel 81 mit den Befestigungsfortsätzen abtrennt. Die vierte Variante 80d dient einzig zur Befestigung des Lagerteils an dem ersten Profilkörper.

Soweit im Rahmen der vorliegenden Anmeldung von oben und unten die Rede ist, bezieht sich dies auf die Richtung der Schwerkraft, welche beim Betrieb der Vorrichtung mit der Hubrichtung 12 zusammenfällt.

Fig. 4 zeigt einen Längsschnitt eines Hubantriebs 60. Alle Hubantriebe 60 der Vorrichtung sind identisch ausgebildet, wobei der erste Schenkel 81 wahlweise an der ersten, der zweiten oder der dritten Variante (Nr. 80a; 80b; 80c in Fig. 3) des Verbindungsteils vorgesehen sein kann. In der Mitte des ersten Schenkels 81 ist ein freies Ende einer Kolbenstange 65 befestigt, welche sich in Hubrichtung 12 erstreckt. Am gegenüberliegenden Ende ist ein kreisrunder Kolben 66 fest mit der Kolbenstange 65 verbunden. Der Kolben 66 ist in einer kreiszylindrischen Zylinderbohrung 67 eines Gehäuses 61 linearbeweglich aufgenommen. Die Zylinderbohrung 67 ist mit einem gesonderten Deckel 72 luftdicht verschlossen. Der Kolben 66 trennt zwei Druckkammern voneinander ab, welche jeweils mit einem (nicht dargestellten) Anschluss für Druckluft versehen sind. Dementsprechend ergeben die vorstehend genannten Bauteile einen doppeltwirkenden Pneumatikzylinder 64.

Bezüglich der Förderrichtung 11 zu beiden Seiten unmittelbar neben der Zylinderbohrung 67 sind die beiden ersten Federn 62 angeordnet. Die ersten Federn 62 sind in Form von Schraubenfedern ausgebildet, welche sich in Hubrichtung 12 erstrecken. Sie sind mit einem Spannmechanismus 73 auf eine feste Länge vorgespannt. Die gesondert vormontierbare Baugruppe aus Spannmechanismus 73 und erster Feder 62 ist in einem zugeordneten Sackloch des Gehäuses 61 aufgenommen. In den ersten Schenkel 81 ist fluchtend zu den beiden ersten Federn 62 jeweils eine Stellschraube 81 eingeschraubt, welche als verstellbarer erster Anschlag 86 für die zugeordnete erste Feder 62 dient. Dabei liegt insbesondere in der dargestellten mittleren Stellung des Hubantriebs 60 die Stellschraube 84 an dem Spannmechanismus 73 an. Die Stellschrauben 85 können beispielsweise mit einem Stirnlochschlüssel verstellt werden, der in entsprechende Sacklöcher an der Oberseite der Stellschrauben 84 eingreift. Wenn der Kolben 66 durch Druckluftzufuhr nach unten bewegt wird, wird der Spannmechanismus 73 mitsamt der ersten Feder 62 in Hubrichtung 12 zusammengedrückt.

Koaxial zu den beiden ersten Federn 62 ist jeweils eine zweite Feder 63 angeordnet, welche zwischen dem Boden des Gehäuses 61 und einem zugeordneten Sackloch in einem Koppelteil 71 unter Vorspannung eingebaut ist. Das Koppelteil 71 ist über zwei kreiszylindrische Führungsstangen 68 fest mit dem ersten Schenkel 81 verbunden, wobei die beiden ersten Federn 62 bezüglich der Förderrichtung 11 zwischen den Führungsstangen 68 angeordnet sind. Die Führungsstangen 68 durchsetzen das Gehäuse 61, wobei sie dort in Gleitbuchsen 74 in Hubrichtung 12 linearbeweglich gelagert sind. Das erste Ende 69 der Führungstangen 68 ist dabei mit dem ersten Schenkel 81 verschraubt, wobei das gegenüberliegende zweite Ende 70 der Führungsstangen 68 mit dem Koppelteil 71 verschraubt ist.

Hinzuweisen ist noch auf die kreisrunde Bohrung 75 in der Mitte des Koppelteils 71. Dort findet die Bewegungskopplung zwischen den Hebelarmen (Nr. 30 in Fig. 2) und der Hubvorrichtung 60 statt.

### Bezugszeichenliste

- 10: Vorrichtung
- 11: Förderrichtung
- 12: Hubrichtung
- 13: Querrichtung

- 20: Tragbaugruppe
- 21: zweiter Profilkörper
- 25: Tragplatte
- 26: Hebelvorrichtung
- 27: Drehlager der Hebelvorrichtung
- 28: Befestigungsblech für übergeordnete Fördervorrichtung
- 29: Achse
- 30: Hebelarm

- 40: Führungsbaugruppe
- 41: erstes Zugmittel
- 42: zweites Zugmittel
- 43: Elektromotor
- 44: Getriebe
- 45: Antriebswelle
- 46: Zahnrad
- 47: Abdeckblech
- 48: Gleitführung
- 49: zweiter Anschlag
- 50: erster Profilkörper
- 51: Drehlager der Antriebswelle
- 52: dritter Profilkörper

- 60: Hubantrieb
- 61: Gehäuse
- 62: erste Feder
- 63: zweite Feder
- 64: Pneumatikzylinder
- 65: Kolbenstange
- 66: Kolben
- 67: Zylinderbohrung
- 68: Führungsstange
- 69: erstes Ende der Führungsstange
- 70: zweites Ende der Führungsstange
- 71: Koppelteil
- 72: Deckel
- 73: Spannmechanismus
- 74: Gleitbuchse
- 75: Bohrung

- 80: Rohteil des Verbindungsteils
- 80a: erste Variante des Verbindungsteils
- 80b: zweite Variante des Verbindungsteils
- 80c: dritte Variante des Verbindusteils
- 80d: vierte Variante des Verbindungsteils
- 81: erster Schenkel
- 82: zweiter Schenkel
- 83: dritter Schenkel
- 84: Stellschraube
- 85: Lagerteil
- 86: erster Anschlag
- 87: Befestigungsfortsatz

## Patentansprüche

1. Vorrichtung zum Umsetzen (10) von Werkstücken bzw. Werkstückträgern, mit einer Tragbaugruppe (20), welche an einer übergeordneten Fördervorrichtung befestigbar ist, wobei eine Führungsbaugruppe (40) vorgesehen ist, welche ein erstes und ein zweites endloses Zugmittel (41; 42) umfasst, welche parallel zueinander angeordnet sind, wobei sie eine Förderrichtung (11) definieren, wobei wenigstens ein Hubantrieb (60) vorgesehen ist, mit welchem die Führungsbaugruppe (40) gegenüber der Tragbaugruppe (20) bezüglich einer Hubrichtung (12), die senkrecht zur Förderrichtung (11) ausgerichtet ist, bewegt werden kann, wobei eine Querrichtung (13) senkrecht zur Förder- und zur Hubrichtung (11; 12) ausgerichtet ist, wobei der wenigstens eine Hubantrieb (60) wenigstens eine erste Feder (62) umfasst, welche diesen in einem unbetätigten Zustand in einer mittleren Stellung hält,
**dadurch gekennzeichnet, dass** ein verstellbarer erster Anschlag (86) für die erste Feder (62) vorgesehen ist,
wobei ein gesondertes Verbindungsteil (80a; 80b; 80c) fest mit einem zugeordneten Hubantrieb (60) verbunden ist, wobei in das Verbindungsteil (80a; 80b; 80c) eine Stellschraube (84) eingeschraubt ist, welche den ersten Anschlag (86) für die erste Feder (62) bildet,
wobei wenigstens ein erster Profilkörper (50) vorgesehen ist, der sich mit einer konstanten Querschnittsform in Förderrichtung (11) erstreckt, wobei das erste und/oder das zweite Zugmittel (41; 42) einen zugeordneten ersten Profilkörper (50) umgibt und beweglich an diesem gelagert ist, wobei wenigstens ein Hubantrieb (60) über das zugeordnete Verbindungsteil (80a; 80c) fest mit dem ersten Profilkörper (50) verbunden ist.

2. Vorrichtung nach Anspruch 1,
**dadurch gekennzeichnet, dass** der wenigstens eine Hubantrieb (60) bezüglich der Querrichtung (13) neben dem zugeordneten ersten Profilkörper (50) und vorzugsweise unmittelbar benachbart zu diesem angeordnet ist.

3. Vorrichtung nach einem der vorstehenden Ansprüche,
**dadurch gekennzeichnet, dass** das Verbindungsteil (80a; 80c) einen ersten und einen zweiten Schenkel (81; 82) aufweist, welche sich in Querrichtung (13) erstrecken, wobei sie voneinander weg weisen, wobei sie in Hubrichtung (12) versetzt angeordnet sind, wobei der zugeordnete Hubantrieb (60) am ersten Schenkel (81) befestigt ist.

4. Vorrichtung nach Anspruch 3,
**dadurch gekennzeichnet, dass** der erste Profilkörper (50) am zweiten Schenkel (82) befestigt ist, wobei der zugeordnete Hubantrieb (60) auf der gegenüberliegenden Seite des zugeordneten Verbindungsteils (80a; 80c) angeordnet ist.

5. Vorrichtung nach einem der Ansprüche 3 oder 4,
**dadurch gekennzeichnet, dass** das Verbindungsteil (80a) einen dritten Schenkel (83) aufweist, welcher sich in Hubrichtung (12) erstreckt, wobei an dem dritten Schenkel (83) wenigstens mittelbar eine Antriebswelle (45) drehbar gelagert ist, wobei das erste und/oder das zweite Zugmittel (41; 42) in Antriebsverbindung mit der Antriebswelle (45) stehen.

6. Vorrichtung nach Anspruch 5,
**dadurch gekennzeichnet, dass** dem dritten Schenkel (83) ein gesondertes Lagerteil (85) zugordnet ist, in dem die Antriebswelle (45) drehbar gelagert ist, wobei die Lage des Lagerteils (85) bezüglich dem dritten (83) Schenkel in Hubrichtung (12) verstellbar ist.

7. Vorrichtung nach einem der vorstehenden Ansprüche,
**dadurch gekennzeichnet, dass** der wenigstens eine Hubantrieb (60) einen doppeltwirkenden Pneumatikzylinder (64) umfasst, dessen Kolbenstange (65) sich in Hubrichtung (12) erstreckt, wobei das Verbindungsteil (80a; 80b; 80c) fest mit einem freien Ende der Kolbenstange (65) verbunden ist.

8. Vorrichtung nach Anspruch 7,
**dadurch gekennzeichnet, dass** der wenigstens eine Hubantrieb (60) zwei Führungsstangen (68) umfasst, welche in Förderrichtung (11) beabstandet angeordnet sind, wobei der Pneumatikzylinder (64) zwischen den Führungsstangen (68) angeordnet ist, wobei die Führungsstangen (68) an einem ersten Ende (70) fest mit dem Verbindungsteil (80a; 80b; 80c) verbunden sind.

9. Vorrichtung nach Anspruch 8,
**dadurch gekennzeichnet, dass** der wenigstens eine Hubantrieb (60) ein Gehäuse (61) umfasst, in dem die zwei Führungsstangen (68) bezüglich der Hubrichtung (12) linearbeweglich gelagert sind, wobei das Gehäuse (61) eine Zylinderbohrung (67) aufweist, in welcher ein Kolben (66), der mit der Kolbenstange (65) verbunden ist, aufgenommen ist.

10. Vorrichtung nach Anspruch 8 oder 9,
**dadurch gekennzeichnet, dass** zwei erste Federn (62) vorgesehen sind, die in Förderrichtung (11) benachbart zu einer zugeordneten Führungsstange (68) angeordnet sind.

11. Vorrichtung nach einem der Ansprüche 8 bis 10,
**dadurch gekennzeichnet, dass** der wenigstens eine Hubantrieb (60) ein Koppelteil (71) umfasst, welches an einem zweiten (70), dem ersten (69) gegenüberliegenden Ende, fest mit den zwei Führungsstangen (68) verbunden ist.

12. Vorrichtung nach Anspruch 11, rückbezogen auf Anspruch 9,
**dadurch gekennzeichnet, dass** zwischen dem Gehäuse (61) und dem Koppelteil (71) wenigstens eine zweite Feder (63) unter Vorspannung eingebaut ist, wobei die erste Feder (62) in dem Gehäuse (61) aufgenommen und an diesem abgestützt ist.

13. Vorrichtung nach Anspruch 11 oder 12,
**dadurch gekennzeichnet, dass** wenigstens eine Hebelvorrichtung (26) mit mehreren Hebelarmen (30), die drehfest miteinander verbunden sind, vorgesehen ist, wobei jedem Hebelarm (30) ein Hubantrieb (60) zugeordnet ist, dessen Koppelteil (71) mit einem freien Ende des zugeordneten Hebelarms (30) bewegungsgekoppelt ist.

14. Vorrichtung nach einem der vorstehenden Ansprüche,
**dadurch gekennzeichnet, dass** an der Führungsbaugruppe (40) ein zweiter Anschlag (49) vorgesehen ist, welcher in Hubrichtung (12) über das erste bzw. das zweite Zugmittel (41; 42) übersteht.

## Claims

1. Device (10) for transferring workpieces or workpiece carriers, having a carrying subassembly (20) which is fastenable to a higher-level conveying device, wherein provision is made of a guide subassembly (40) which comprises a first and a second endless traction means (41; 42) which are arranged parallel to one another, defining a conveying direction (11), wherein provision is made of at least one lifting drive (60) by way of which the guide subassembly (40) can be moved relative to the carrying subassembly (20) with regard to a lifting direction (12) which is oriented perpendicularly to the conveying direction (11), wherein a transverse direction (13) is oriented perpendicularly to the conveying direction (11) and to the lifting direction (12), wherein the at least one lifting drive (60) comprises at least one first spring (62) which keeps the latter in a middle position in an unactuated state,
**characterized in that** provision is made of an adjustable first stop (86) for the first spring (62),
wherein a separate connecting part (80a; 80b; 80c) is firmly connected to an associated lifting drive (60), wherein an adjusting screw (84), which forms the first stop (86) for the first spring (62), is screwed into the connecting part (80a; 80b; 80c), wherein provision is made of at least one first profiled body (50) which extends in the conveying direction (11) with a constant cross-sectional shape, wherein the first and/or the second traction means (41; 42) surrounds an associated first profiled body (50) and is mounted in a movable manner thereon, wherein at least one lifting drive (60) is firmly connected to the first profiled body (50) via the associated connecting part (80a; 80c).

2. Device according to Claim 1,
**characterized in that** the at least one lifting drive (60) is arranged next to the associated first profiled body (50) and preferably immediately adjacently thereto, with regard to the transverse direction (13).

3. Device according to either of the preceding claims,
**characterized in that** the connecting part (80a; 80c) has a first and a second limb (81; 82) which extend in the transverse direction (13), pointing away from one another, wherein said limbs (81; 82) are arranged in an offset manner in the lifting direction (12), wherein the associated lifting drive (60) is fastened to the first limb (81).

4. Device according to Claim 3,
**characterized in that** the first profiled body (50) is fastened to the second limb (82), wherein the associated lifting drive (60) is arranged on the opposite side of the associated connecting part (80a; 80c).

5. Device according to either of Claims 3 and 4,
**characterized in that** the connecting part (80a) has a third limb (83) which extends in the lifting direction (12), wherein a drive shaft (45) is mounted in a rotatable manner at least indirectly on the third limb (83), wherein the first and/or the second traction means (41; 42) are in drive connection with the drive shaft (45).

6. Device according to Claim 5,
**characterized in that** the third limb (83) is assigned a separate bearing part (85) in which the drive shaft (45) is mounted in a rotatable manner, wherein the position of the bearing part (85) is adjustable with regard to the third limb (83) in the lifting direction (12).

7. Device according to one of the preceding claims,
**characterized in that** the at least one lifting drive (60) comprises a double-acting pneumatic cylinder (64), the piston rod (65) of which extends in the lifting direction (12), wherein the connecting part (80a; 80b; 80c) is firmly connected to a free end of the piston rod (65).

8. Device according to Claim 7,
**characterized in that** the at least one lifting drive (60) comprises two guide rods (68) which are arranged in a spaced-apart manner in the conveying direction (11), wherein the pneumatic cylinder (64) is arranged between the guide rods (68), wherein the guide rods (68) are firmly connected to the connecting part (80a; 80b; 80c) at a first end (70).

9. Device according to Claim 8,
**characterized in that** the at least one lifting drive (60) comprises a housing (61) in which the two guide rods (68) are mounted in a linearly movable manner with regard to the lifting direction (12), wherein the housing (61) has a cylinder bore (67) in which a piston (66), which is connected to the piston rod (65), is received.

10. Device according to Claim 8 or 9,
**characterized in that** provision is made of two first springs (62) which are arranged adjacently to an associated guide rod (68) in the conveying direction (11).

11. Device according to one of Claims 8 to 10,
**characterized in that** the at least one lifting drive (60) comprises a coupling part (71) which is firmly connected to the two guide rods (68) at a second end (70) away from the first end (69).

12. Device according to Claim 11, when referring back to Claim 9,
**characterized in that** at least one second spring (63) is installed under pretension between the housing (61) and the coupling part (71), wherein the first spring (62) is received in the housing (61) and is supported thereon.

13. Device according to Claim 11 or 12,
**characterized in that** provision is made of at least one lever device (26) having a plurality of lever arms (30) which are connected together for conjoint rotation, wherein each lever arm (30) is assigned a lifting drive (60) of which the coupling part (71) is coupled in terms of movement to a free end of the associated lever arm (30).

14. Device according to one of the preceding claims,
**characterized in that** a second stop (49), which projects beyond the first and the second traction means (41; 42) in the lifting direction (12), is provided on the guide subassembly (40).

## Revendications

1. Dispositif de déplacement (10) de pièces ou de porte-pièces, comprenant un module porteur (20) qui peut être fixé sur un dispositif de transport supérieur, un module de guidage (40) étant prévu, lequel comprend un premier et un deuxième moyen de traction sans fin (41 ; 42) qui sont disposés parallèlement l'un à l'autre et définissent une direction de transport (11), au moins un entraînement de levage (60) étant prévu, avec lequel le module de guidage (40) peut être déplacé par rapport au module porteur (20) par rapport à une direction de levage (12) qui est orientée perpendiculairement à la direction de transport (11), une direction transversale (13) étant orientée perpendiculairement à la direction de transport et à la direction de levage (11 ; 12), l'au moins un entraînement de levage (60) comprenant au moins un premier ressort (62) qui retient celui-ci dans une position centrale dans un état non actionné,
**caractérisé en ce qu'**une première butée réglable (86) est prévue pour le premier ressort (62),
une partie de liaison séparée (80a ; 80b ; 80c) étant connectée fixement à un entraînement de levage associé (60), une vis de réglage (84) étant vissée dans la partie de liaison (80a ; 80b ; 80c), laquelle forme la première butée (86) pour le premier ressort (62),
au moins un premier corps profilé (50) étant prévu, lequel s'étend dans la direction de transport (11) avec une forme constante en section transversale, le premier et/ou le deuxième moyen de traction (41 ; 42) entourant un premier corps profilé associé (50) et étant supporté(s) de manière déplaçable sur celui-ci, au moins un entraînement de levage (60) étant connecté fixement au premier corps profilé (50) par le biais de la partie de liaison associée (80a ; 80c).

2. Dispositif selon la revendication 1, **caractérisé en ce que** l'au moins un entraînement de levage (60) est disposé par rapport à la direction transversale (13) à côté du premier corps profilé associé (50) et est disposé de préférence directement à côté de celui-ci.

3. Dispositif selon l'une quelconque des revendications précédentes, **caractérisé en ce que** la partie de liaison (80a ; 80c) présente une première et une deuxième branche (81 ; 82) qui s'étendent dans la direction transversale (13), sont orientées à l'écart l'une de l'autre, et sont disposées de manière décalée dans la direction de levage (12), l'entraînement de levage associé (60) étant fixé sur la première branche (81).

4. Dispositif selon la revendication 3, **caractérisé en ce que** le premier corps profilé (50) est fixé sur la deuxième branche (82), l'entraînement de levage associé (60) étant disposé sur le côté opposé de la partie de liaison associée (80a ; 80c).

5. Dispositif selon l'une quelconque des revendications 3 ou 4, **caractérisé en ce que** la partie de liaison (80a) présente une troisième branche (83) qui s'étend dans la direction de levage (12), un arbre d'entraînement (45) étant supporté de manière rotative au moins de manière indirecte sur la troisième branche (83), le premier et/ou le deuxième moyen de traction (41 ; 42) étant en liaison d'entraînement avec l'arbre d' entraînement (45).

6. Dispositif selon la revendication 5, **caractérisé en ce qu'**une partie de palier séparée (85) est associée à la troisième branche (83), dans laquelle partie de palier l'arbre d'entraînement (45) est supporté de manière rotative, la position de la partie de palier (85) par rapport à la troisième branche (83) pouvant être réglée dans la direction de levage (12).

7. Dispositif selon l'une quelconque des revendications précédentes, **caractérisé en ce que** l'au moins un entraînement de levage (60) comprend un vérin pneumatique à double action (64), dont la tige de piston (65) s'étend dans la direction de levage (12), la partie de liaison (80a ; 80b ; 80c) étant connectée fixement à une extrémité libre de la tige de piston (65).

8. Dispositif selon la revendication 7, **caractérisé en ce que** l'au moins un entraînement de levage (60) comprend deux tiges de guidage (68) qui sont disposées de manière espacée dans la direction de transport (11), le vérin pneumatique (64) étant disposé entre les tiges de guidage (68), les tiges de guidage (68) étant connectées fixement à la partie de liaison (80a ; 80b ; 80c) au niveau d'une première extrémité (70).

9. Dispositif selon la revendication 8, **caractérisé en ce que** l'au moins un entraînement de levage (60) comprend un boîtier (61) dans lequel les deux tiges de guidage (68) sont supportées de manière déplaçable linéairement par rapport à la direction de levage (12), le boîtier (61) présentant un alésage de cylindre (67) dans lequel est reçu un piston (66) qui est connecté à la tige de piston (65).

10. Dispositif selon la revendication 8 ou 9, **caractérisé en ce que** deux premiers ressorts (62) sont prévus, lesquels sont disposés dans la direction de transport (11) à côté d'une tige de guidage associée (68).

11. Dispositif selon l'une quelconque des revendications 8 à 10, **caractérisé en ce que** l'au moins un entraînement de levage (60) comprend une partie de couplage (71) qui est connectée fixement aux deux tiges de guidage (68) au niveau d'une deuxième extrémité (70) opposée à la première (69).

12. Dispositif selon la revendication 11 lorsqu'elle se rapporte à la revendication 9, **caractérisé en ce qu'**entre le boîtier (61) et la partie de couplage (71) est monté avec précontrainte au moins un deuxième ressort (63), le premier ressort (62) étant reçu dans le boîtier (61) et étant supporté sur celui-ci.

13. Dispositif selon la revendication 11 ou 12, **caractérisé en ce qu'**il est prévu au moins un dispositif de levier (26) avec plusieurs bras de levier (30) qui sont connectés les uns aux autres de manière solidaire en rotation, un entraînement de levage (60) étant associé à chaque bras de levier (30), la partie de couplage (71) dudit entraînement de levage étant accouplée de manière déplaçable à une extrémité libre du bras de levier associé (30).

14. Dispositif selon l'une quelconque des revendications précédentes, **caractérisé en ce qu'**une deuxième butée (49) est prévue au niveau du module de guidage (40), laquelle fait saillie dans la direction de levage (12) au-delà du premier ou du deuxième moyen de traction (41 ; 42).
